# EUROPEAN PATENT APPLICATION

(11) **EP 1 477 942 A1**
(43) Date of publication of application: **17.11.2004**
(21) Application number: 03425310.4
(22) Date of filing: 14.05.2003
(51) Int. Cl.: G07F 7/00, G07F 7/08, G07F 15/00

(54) **Electric power meter with smartcard power supply enabling**

(71) Applicant: Garra, Giovanni, 95049 Vizzini (Catania) (IT); Portelli, Vincenzo, 97100 Sicli (Ragusa) (IT); Bellardita, Filippo, 95030 Mascalucia (Catania) (IT); Di Pasquale, Angelo Filippo, 94100 Enna (IT); Tirrito, Francesco Paolo, 94100 Enna (IT)
(72) Inventor: Garra, Giovanni, 95049 Vizzini (Catania) (IT); Portelli, Vincenzo, 97100 Sicli (Ragusa) (IT); Bellardita, Filippo, 95030 Mascalucia (Catania) (IT); Di Pasquale, Angelo Filippo, 94100 Enna (IT); Tirrito, Francesco Paolo, 94100 Enna (IT)
(74) Representative: Botti, Mario

(57) **Abstract**

The invention relates to an electronically controlled power meter unit (1), of the kind associated with an industrial or private user outlet (6) placed at the end of a mains line and incorporating a microcontroller (8) to handle and control the supply of electric power delivered from a powermanager. The meter unit (1) comprises:
a reader (11) of credit cards (1) associated with the microcontroller (8) to enable operation of the meter (A) for the prefixed credit of the card;
a memory (17) associated with the microcontroller (8) to exchange data and information with said credit card (1);
means (18) for receiving/transmitting data from/to a powerhouse in order to recharge the credit on said card (2) by means of said memory (17).

## Description

### Field of Application

The present invention broadly relates to electric power meters as installed at user outlets for the electric power companies and units to deliver and measure electric power.

Although not limited to, the invention particularly relates to an electronic power meter of a kind which is linked to a user outlet, either private or industrial, located upstream of the mains line and incorporating a microcontroller to monitor and manage a supply of electric power delivered from a powermanager.

The invention further relates to a method for monitoring and measuring the amount of electric power that is supplied to a user outlet from a powermanager, the method being based on the use of an electric power meter incorporating a microcontroller.

### Prior Art

As it is well known in this technical field, the companies or authorized units that provide industries and communities with electric power employ proper electric power meters for measuring the amount of electric power that is supplied to such outlets.

These power meters, commonly known as counters, are installed at each user's outlet and allow to measure, with high precision and on the basis of a measure unit, the amount of power delivered over a given time, e.g. in kiloWatts/hour.

The installation of a power meter at a user's outlet usually involves the payment of a fixed rent fee which is completely independent from the power consumption.

In particular cases, however, it is desired that a meter can be set to deliver either a predetermined amount of power or for a limited time period, e.g. on a seasonal or temporary basis.

Examples of these situations are given by holiday villages, camping sites and tourist centers in general where the management need to calculate the electric consumption of each client in order to charge each visitor for the exact amount of used power.

In these cases, special power meters are employed and enabled by pre-paid electronic cards, commonly referred to as smart cards. Each card contains data and information to enable a power meter as above to deliver a predetermined amount of electric power in kiloWatts/hour.

To discourage pilfering, each power meter is given a relevant, unique card, which is precharged to be then discharged during the stay according to the actual use.

The smart-card is introduced into the power meter to enable it to deliver electric power as long as the smart-card is inserted and contains some credit.

A microcontroller inside the power meter periodically reads the smart-card content and deducts the credit as power is being used up.

In some power meters, as a "reserve" limit is approached, i.e. near the exhaustion of the smart-card credit, the card can be temporarily removed for recharging it without affecting the supply of power.

Although advantageous on several counts, these solution are only used for private applications, because of the difficulties experienced by the power companies in controlling smart-card enabled power meters.

A smart-card enabled power meter as above can be checked in situ, but not remotely. Furthermore, a single user cannot use multiple power meters, for example by associating them to a single smart-card.

Power meters are known, which are remotely controlled by conveyed waves, but they are normal power meters communicating by means of protocols (Echelon or else) on the mains line and their maximum deliverable power can be remotely configured.

Briefly, power supply companies currently do not have and do not provide users with any kind of power meters able to deliver power after being enabled by a pre-paid card and concurrently communicating through waves being conveyed between the user and the powermanager

The underlying technical problem of this invention is to provide a novel power meter with suitable constructional and functional features for the unit to be enabled by a pre-paid card, and for the card credit status and rates to be remotely controlled by the powermanager.

### Summary of the Invention

The solution idea on which the invention stands is that of equipping common power meters with a memory for exchanging information with pre-paid cards, especially for on-line receiving data to recharge the card, as well as with means for reading, identifying and enabling pre-paid cards.

On the basis of this idea, the technical problem is solved by an electric power meter as previously indicated and as defined in the characterizing part of Claim 1 herewith attached.

The invention further relates to a method for measuring and monitoring the amount of electric power that is supplied to a user outlet from a powermanager, as defined in Claim 6 foll..

The features and advantages of the power meter and of the measuring method according to the invention should be apparent from the following description of an embodiment thereof, given by way of example and not of limitation with reference to the accompanying drawings.

### Brief Description of the Drawings

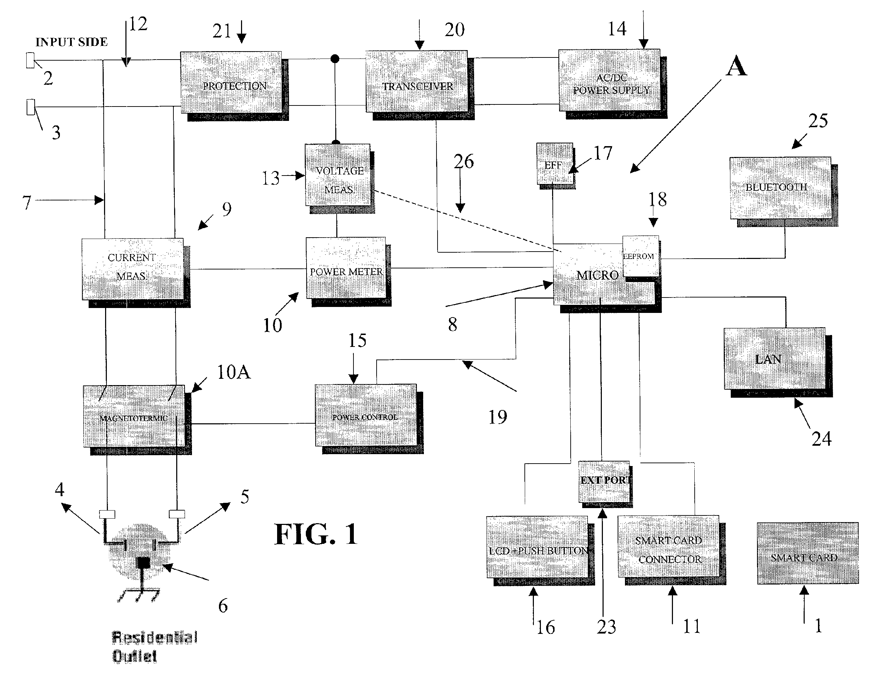

Figure 1 is a block diagram of an electric power meter according to the invention.
Figure 2 is a block diagram of an optional enabling module according to the invention.
Figure 3 is a block diagram of a power supply module according to the invention.

### Detailed Description

With reference to the drawings, an electronically controlled power meter according to this invention is schematically shown generally with A, and is adapted to be enabled by a pre-paid card 1.

The electronically controlled power meter A will also be referred to as the meter hereinafter.

The card 1 is an electronic credit card incorporating an integrated circuit, e.g. a so-called "smart-card".

The meter A is installed at any industrial or private user outlet 6.

A power supply module C installed at the powermanager, and a house module B which may be optionally installed at the user's, are associated with the meter A as explained here below.

In particular, the meter A has a pair of input terminals 2, 3 which are connected to a mains line, not shown because conventional, and a pair of output terminals 4, 5 connected towards a load represented by the user outlet 6.

For example, the mains line may be a conventional 400V/230V AC line having a phase polarity at the terminal 2 and a neutral polarity at the terminal 3. The terminals 2 and 4 are interconnected through an internal line 7.

The meter A includes a microcontroller 8 having a clocked CPU and being operative to manage and control all the components of the meter A.

A conventional current meter 9 is provided on an internal input/ output connection line 7, between the input terminal 2 and the output terminal 4.

This current meter 9 is connected to a power measuring block or power meter 10 which provides the entity of the measurement detected by the current meter 9.

A voltage meter 13 is similarly inserted on a line branching off the power meter 10 is. Thus, the power meter 10 can provide the microcontroller 8 with a datum related to the instant power consumption.

An optional line 26 associated with a suitable voltage meter 13 is also provided, which allows the powermanager to measure the instant voltage on the meter A for service improvement.

A protection circuit 21 is inserted on a line 12 branching from line 7. This protection circuit 21 is adequate to filter out any overvoltage/overcurrent which might harm circuits of the meter A.

A conventional magneto-thermal switch 10A is provided on the line 7, downstream of the current meter 9, in order to protect the user's outlet against short-circuits.

The power meter unit A further comprises a switching block 15 that forces the magneto-thermal switch 10A to cut off the power supply of the user outlet 7. The switching block 15 is controlled from an output 19 of the microcontroller 8, e.g. through a triac which is suitably isolated from the microcontroller 8 and energizes a relay able to force the opening of the contacts of the switch 10A.

To prevent pilfering of the power meter unit A, a safety switch 17 is mounted inside the housing of the meter A and connected with the microcontroller 8. Upon a pilfering attempt, this switch 17 would function to activate the switching block 15. At the same time, a warning signal would be sent to the powermanager.

Only the power supply company is authorized to force or restore the normal operation of meter A, either remotely through conveyed waves or in situ by resetting the microcontroller 8 to normal operation, thus allowing manual restoration of the magneto-thermal switch 10A in order to deliver power to the user outlet 6.

Advantageously, the electronic card 1 is introduced into a special housing or reader, schematically shown with 11, to allow the microcontroller 8 to read data and information stored in the card 1.

In particular, the microcontroller 8 can read agreed terms, the credited amount of power associated to the card 1 and possibly the expiry time for such credit to transfer these data on an internal memory 18. Briefly, the content of the card 1 is stored in the internal memory 18 and, at the same time, the card credit is set to zero.

The internal memory 18 adds the preceding credit to the one discharged by the card 1.

The associated data can be seen by the user on a liquid crystal display 16, e.g. an alphanumerical display, provided with a suitable key for looking through the various pages.

Obviously also the display 16 and the key are subjected to the microcontroller 8. Upon the card 1 being introduced into the reader 11, a message appears on the display to inform the user about the time period, set by the power company, within which the credit of the card 1 will be discharged on the internal memory 18.

At the end of that period the above operation is carried out and thus the credit of the card 1 is transferred to the internal memory 18.

The electronic components of the power meter 1 are supplied at voltages between 5 to 16 V by means of a power supplier 14 that incorporates a transformer or, alternatively, an AC/DC converter preferably constructed with solid state components. The power supplier 14 gets voltage from the branched line 12 and the neutral line connecting the input and output terminals 3 and 5, respectively.

Advantageously in this invention, the power meter A has additional features enhancing its operational flexibility.

For example, means 20 are provided to receive and transfer analog or digital information from/to a remote powerhouse. These means 20 comprise a generator of conveyed waves.

The transmission of output and input data from/to the power meter A takes place through an FSK modem that allows information and data to be transmitted on the mains line from/to a power supply module C, and optionally to a further module B installed at the user's.

The modules B and C are described in greater detail below.

Local transmissions to the user's module B and the supply module C take place at different transmission frequencies to prevent interferences.

A serial or IR port 23 is arranged to allow the power company (and/or representatives thereof) to communicate locally with the microcontroller 8 for changing the content of the internal memory 18, the latter containing, besides the credit, settings for the meter A. Communication can be enabled either by a special card in the hands of the power company's representatives or by a security code sent to the microcontroller 8 through the port 23.

Optional Lan 24 and Bluetooth 25 local blocks may be used for interfacing the meter A with fixed and mobile user's networks.

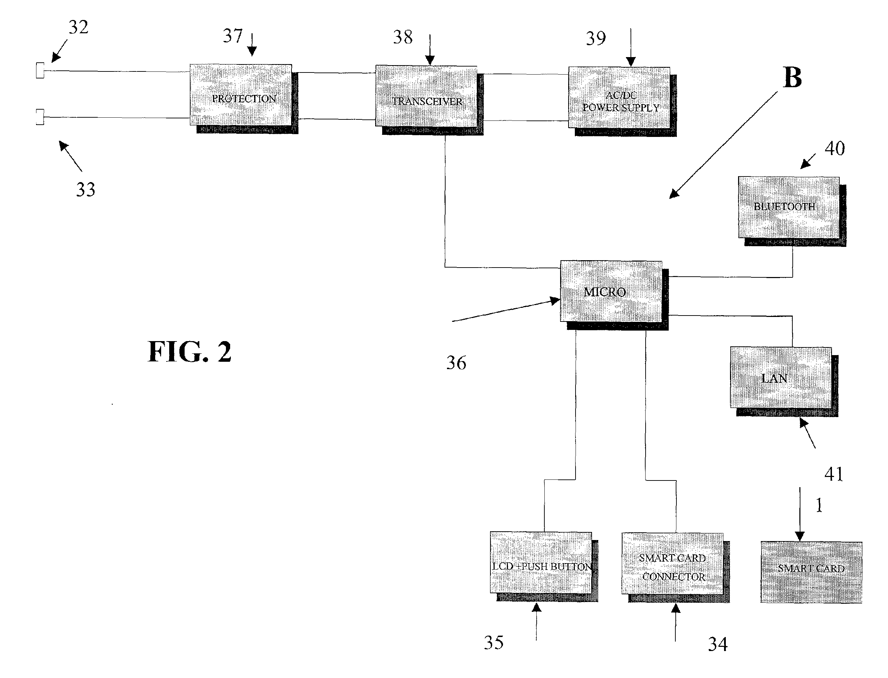

With particular reference to the example of Figure 2, B schematically shows an optional user's module that may be installed at the user's and associated with the meter A. The module B includes a respective microcontroller 36, protection circuit 37, and supply block 39.

One module B would serve each meter A, and is plugged into any user's socket managed by the meter A. This socket is illustrated by terminals 32 and 33 in Figure 2.

The module B may be provided on user's demand for his/her own convenience. This module may be seen as a much simplified version of the meter A effective to allow the same operations to the ones carried out wherever the meter A is installed.

The user's module B can display, on a respective screen 35, the same data as the ones shown by the alphanumerical display 16 of the meter A. In addition, the module B allows to charge data of card 1 on the internal memory 18 of the meter A, inserting the card in a reader 34, which is identical to the reader 11 of the meter A.

The module B has a respective microcontroller 36 arranged to handle all the operations for communicating with the meter A through a generator 38 of conveyed waves, which exchanges information with the generator 20 of conveyed waves of the meter A.

Optionally, Lan 40 and Bluetooth 41 local blocks may be provided in the module B for interfacing the meter with fixed and movable user's networks.

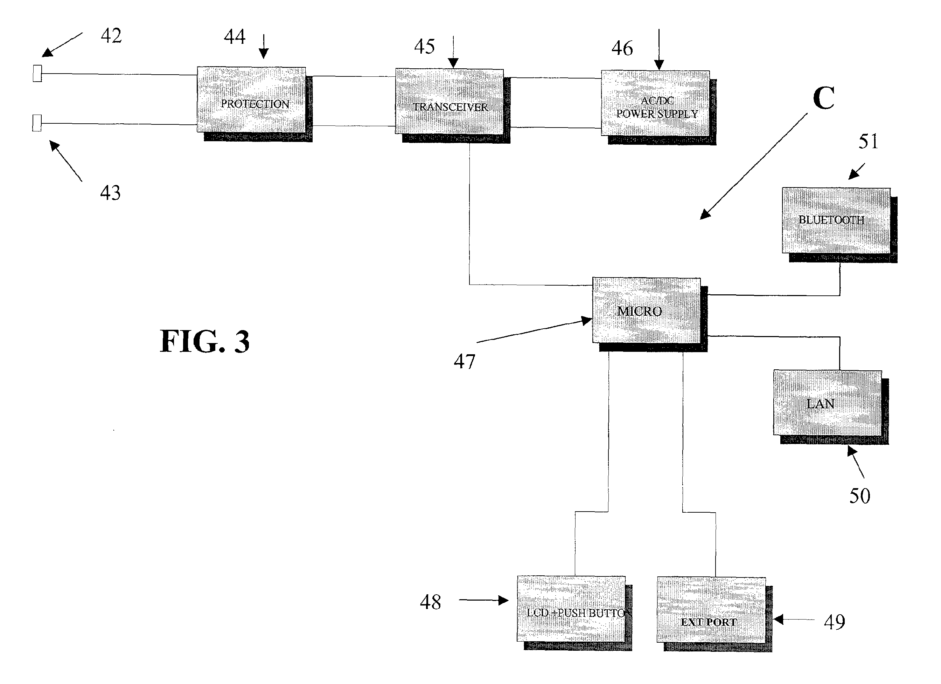

An additional supply module C installed at the powermanager, will now be described with particular reference to the example of Figure 3.

The power supply module C is structurally similar to the user's module B, but designed for a different function.

This module C can communicate with a plurality of meters A through a generator 45 of conveyed waves. It also has a respective microcontroller 47 arranged to handle communication between the powerhouse and the user outlets, again through the generator 45 of conveyed waves being in communication with several generators 20 of conveyed waves identifiable by means of an identification code associated with each meter A.

Communications with several meters A occurs on the mains line itself, and each microcontroller 8 of each meter A recognizes the source of a message by the identification code thereto associated.

The power supply module C may include a port 49 for communicating through serial connections or IR ports.

Lan 51 and Bluetooth blocks 51 and 50 may be also provided on the module C, these blocks allowing external interfacing with cable and wireless communication lines of handler for data exchange.

Through this power supply module C, the powermanager can communicate over a mains line and exchange information with the power meters A.

Thus, the content of the card 1 is simple to be checked both during the enabling and possible disabling step, e.g. after attempted pilfering of the card content.

Let us now briefly review the operation of the meter according to the invention.

The above invention can operate in three modes, namely:
a. pre-charging on the internal memory and card profile microcontroller;
b. without card, by remotely enabling through transceiver;
c. checking through transceiver and pre-charging with smart-card 1.

Only the third of these modes of operation will be analyzed because the first two are simplified versions in that the first does not allow data transmission and the second does not allow pre-charging with smart-card 1.

The novel aspect of the invention first lies in the possibility of enabling the meter A to deliver power to the user outlet 6 by reading the electronic card 1.

Briefly, the microcontroller 8 in the meter A will enables the electronic components of the meter itself by reading the information on card 1, specifically by reading a coded enabling signal and information about the amount of power credited on the card:

Therefrom, the meter A alone can deliver power until the amount recorded in the internal memory 18 is finished. Upon total exhaustion of the credit, the microcontroller 8 will activate the switch 15 and either a new card 1 will have to be used or the card itself will have to be recharged as described hereinafter.

A maximum predetermined power value to be delivered can also be forced in order to guarantee a minimum necessary value to the user when the credit is completely exhausted. A special legend on the display 16 will warn and inform the user about the approaching exhaustion of his/her credit and, in case of total consumption, it will inform about the minimum amount of power still available.

The data and information contained in the card 1 can be transferred to the memory 18 of the meter A under control of the microcontroller 8.

By using the generator 20 of conveyed waves, a powerhouse can receive and transmit data and information from/to a given power meter unit to top up the credit recorded on the electronic card 1 or restore it before it is completely exhausted.

On this occurrence, the user can initiate a restoring procedure allowing the powermanager to recharge the meter unit through repletion of the card 1 or through cashcard or at authorized sell-points.

When the smart card is replenished by using a cashcard or at a lotto-like receiving office, the payment is charged on the user's account and through the dispenser a conveyed wave signal is sent to the meter unit.

The meter of this invention allows to define different rates: each user outlet can be programmed for scaled hours of the day, e.g. during night hours or on holidays, for optimum power usage.

In addition, for extended or additional power usage: the meter unit can operate in a flexible way thus not needing to immediately unlatch the switch 15 but using the following criteria:
1) for transients of short-duration, e.g. of less than 30 seconds or any other length of time agreed upon with the power company, the rate may be a current standard one;
2) for longer transients, e.g. of more than 30 seconds or any other length of time agreed upon with the power company, or for a maximum period of days also agreed upon with the power company, the standard rate will be multiplied by a factor set by the powermanager.

At the end of that period the user will be notified to change his/her agreement terms within a given date, whenafter the meter unit will disallow any power usage exceeding the agreed terms. The meter unit of this invention has a major advantage in that it can restrict the delivery of power for the credit amount recorded on the electronic card. This entitles the user to fully use his/her credit with no extra payments being involved, and allows the electric power company to advantageously cash on a pre-paid system.

Furthermore, the electronic card associated with each meter unit is easy to be used and handled, and lends itself for any user outlet typologies at no restrictions on the length of time when the electric power can be used.

Another advantage of importance is that the means for replenishing the electronic credit card are under full control of the electric power company, the latter being therefore entitled to check the correct use and regularity of the demand.

## Claims

1. Electronic power meter (A), of a kind which is linked to a user outlet (6), either private or industrial, located upstream of a mains line and incorporating a microcontroller (8) to monitor and manage a supply of electric power delivered from a powermanager, **characterized in that** it comprises:
a reader (11) of credit cards (1) associated with the microcontroller (8) to enable operation of the meter (A) for the prefixed credit of the card;
a memory (18) associated with the microcontroller (8) to exchange data and information with said card (1);
means (20) for receiving/ transmitting data from/ to a powerhouse (C) in order to recharge the credit on said card (2) by means of said memory (18).

2. A meter according to Claim 1, **characterized in that** said credit card (1) is a magnetic card or an electronic card incorporating an integrated circuit, e.g. a "smart-card".

3. A meter according to Claim 1, **characterized in that** data receiving/ transmitting means (20) comprise a generator of conveyed waves.

4. A meter according to Claim 1, **characterized in that** it comprises a display (16) to indicate the approaching exhaustion of the credit of said card (1).

5. A meter according to Claim 1, **characterized in that** it comprises a power supplier (14) for the electronic components of the meter, said power supplier incorporating an AC/DC converter.

6. A meter according to Claim 1, **characterized in that** data are received/transmitted from/to a module (C) being installed at the powermanager and having a similar design to the meter (A), said module also being adapted for one-to-several relationship.

7. A meter according to Claim 1, **characterized in that** a module (B), being a simplified version of the meter, may be installed at the user outlet and connected with the meter through the same mains line.

8. A method for measuring and monitoring the amount of electric power delivered to a user outlet (6) by a powermanager, wherein a power meter (A) is used having a microcontroller (8), the method being **characterized in that** it comprises:
step of enabling the meter (A) by reading the content of a credit card (1);
transferring the credit of said card (1) on a memory associated with the microcontroller.

9. A method according to Claim 8, **characterized in that** a display (16) on said meter (A) indicates when the exhaustion of the credit is approaching.

10. A method according to Claim 8, **characterized in that** the transmission of data and information from/to said powerhouse is controlled by said powermanager by using a power supply module (C) adapted to communicate with a plurality of meters (A).

11. A method according to Claim 10, **characterized in that** the maximum amount of power to be delivered to the user outlet (6) is set by data transmission (20) to the meter (A) from said module (C).

12. A method according to Claim 8, **characterized in that** a display (16) on said meter unit (A) indicates when the exhaustion of the credit is approaching.

13. A method according to Claim 8, **characterized in that** a display (16) on said meter (A) indicates the power allowance following when the credit exhausts, and that the possible exceeding power given by the powermanager is subjected to a higher rate for a predetermined time period.

14. A method according to Claim 12, **characterized in that** said display (16) shows service messages from the powermanager.

15. A method according to Claim 8, **characterized in that** credit enabling and transferring requests are handled at the user outlet by an optional module (B) being a simplified version of the meter unit and being linked to the latter through the same the mains line.
